# EUROPÄISCHE PATENTSCHRIFT

(11) **EP 2 986 866 B1**
(45) Veröffentlichungstag und Bekanntmachung des Hinweises auf die Patenterteilung: **22.03.2017**
(21) Anmeldenummer: 14717447.8
(22) Anmeldetag: 14.04.2014
(51) Int. Cl.: F16D 65/16, B60T 13/06, F16D 65/18, B60T 13/74

(54) **VERFAHREN ZUM BETÄTIGEN EINER ELEKTRISCH BETÄTIGTEN REIBUNGSBREMSE**
METHOD FOR ACTUATING AN ELECTRICALLY ACTUATED FRICTION BRAKE
PROCÉDÉ POUR ACTIONNER UN FREIN A FRICTION A COMMANDE ÉLECTRIQUE

(30) Priorität: 15.04.2013 AT 502572013
(43) Veröffentlichungstag der Anmeldung: 24.02.2016
(73) Patentinhaber: VE Vienna Engineering Forschungs- und Entwicklungs GmbH, 1190 Wien (AT)
(72) Erfinder: PUTZ, Michael, A-8272 Sebersdorf (AT)
(74) Vertreter: Patentanwälte Pinter & Weiss OG
(86) Internationale Anmeldenummer: PCT/EP2014/057504
(87) Internationale Veröffentlichungsnummer: WO 2014/170259

(56) Entgegenhaltungen:
- EP-A2- 0 894 685
- WO-A1-2010/133463
- DE-A1-102006 052 810
- DE-A1-102011 004 772
- DE-A1-102012 202 956
- DE-A1-102012 205 576
- US-A1- 2013 087 417

## Beschreibung

Die gegenständliche Erfindung betrifft ein Verfahren zum Betätigen einer elektrisch betätigten, von einem Elektromotor angetriebenen Reibungsbremse, bei dem für einen Bremsvorgang zur Erzielung einer vorgegebenen Soll-Bremswirkung der Reibungsbremse ein Bremsbelag gegen eine Reibfläche gepresst wird, indem eine zur Soll-Bremswirkung zugehörige Soll-Position der Reibungsbremse (1) angefahren wird.

Eine Reibungsbremse erzeugt zum Bremsen ein vorgegebenes Bremsmoment, bzw. analog eine Bremsanpresskraft, allgemeine eine bestimmte Bremswirkung. Über das bekannte Weg-Kraftverhalten der Bremsbetätigung kann das gewünschte Bremsmoment, bzw. die Bremsanpresskraft, einem Betätigungsweg, z.B. einem Betätigungswinkel, zugeordnet werden, der angefahren werden muss, um die gewünschte Bremswirkung hervorzurufen. Da Bremsmoment gleich Reibkraft mal Reibradius ist und Reibkraft gleich Bremsanpresskraft mal Reibbeiwert ist, kann jeder dieser Werte als Bremswirkung interpretiert werden.

Elektrisch betätigte Reibungsbremsen verwenden einen Elektromotor, um die Reibungsbremse zu betätigen. Der Elektromotor, eventuell über ein Zwischengetriebe oder Übertragungsteile wie Nocken, Exzenter, Hebel, Stangen, Keilen, Verdrehung von Kugelrampen, Schrauben, Wälzkörper in Gewindegängen (z.B. Kugelspindeln), Flüssigkeiten, Gase, etc., treibt dabei eine Andrückeinrichtung an, die den Betätigungsweg zurücklegt, um den Bremsbelag gegen die Reibfläche zu pressen.

In Fällen, wo die elektrisch betätigte Reibungsbremse bei Ausfall der elektrischen Versorgung aus Sicherheitsgründen selbsttätig bremsen muss, ist dafür oftmals eine Hilfsenergiequelle, z.B. in Form einer gespannten Feder, eines Druckmittels, etc., vorgesehen, um die Reibungsbremse hilfsweise zu betätigen. Das wird insbesondere bei Maschinen, wie z.B. Kränen, Aufzüge, etc., oder auch bei Eisenbahnbremsen, benötigt.

Um die Reibungsbremse zu regeln, muss entweder die Bremswirkung (Bremsmoment, Bremskraft, Bremsanpresskraft) oder äquivalent der Betätigungsweg geregelt werden, was in der Regel in einer elektronisch geregelten Reibungsbremse mittels einer Bremsenregeleinheit, z.B. ein PID-Regler, erfolgt. Dazu wurde bis jetzt z.B. die Bremsanpresskraft irgendwie ermittelt oder geschätzt. Fallweise wurde auch ein Dehnmessstreifen auf den Bremssattel angebracht, um die mechanische Verformung zu ermitteln und damit auf die Anpresskraft zu schließen. Solche Dehnmessstreifen mit deren notwendigen Auswerteverstärker sind teuer und empfindlich und würden den Bremsenpreis stark erhöhen. Bei hydraulischen oder elektrohydraulischen Bremsen kann der Bremsdruck hingegen leicht gemessen werden, um sehr genau auf die Anpresskraft zu schließen, weshalb bei solchen Bremsen die Regelung über die Bremswirkung einfach erfolgen kann. Bei elektrisch betätigten Reibungsbremsen, bei denen ein Elektromotor über Übertragungselemente der Andrückeinrichtung wie Hebel, Exzenter, Nocken, Seile, Spindeln, Flüssigkeiten, Gase, etc. den Bremsbelag andrücken, wie z.B. in der WO 2010/133463 A1, wäre die nahe liegende Analogie zur Druckmessung eine Strommessung im Elektromotor, weil der Strom ebenfalls die Kraft bestimmt. D.h. man könnte theoretisch genau so gut wie mit einer Druckmessung durch eine Strommessung des Elektromotors die Bremsanpresskraft messen.

In der DE 10 2006 052810 A1 wird ein Motorstrom oder eine Drehzahl des Elektromotors einer elektrisch betätigten Feststellbremsen gemessen und daraus eine charakteristische Kenngröße ermittelt. Die Kenngröße wird verwendet, um aus den mechanischen und elektrischen Systemgleichungen die Kraftentfaltung zu schätzen. Diese geschätzte Kraftentfaltung wird allerdings nicht zum Betätigen der Feststellbremse verwendet.

In der Praxis eignet sich eine Strommessung aber nur bedingt für die Regelung einer elektrisch betätigten Reibungsbremse. Der Elektromotor hat einen zustandsbedingten (z.B. beeinflusst durch Reibung, Temperatur, etc.) Ruhestrom, der kleine Strommessungen stört, was zu Ungenauigkeiten führt. Die Übertragungselemente der Andrückeinrichtung haben mehr oder weniger schlechte und vor allem auch nicht konstante Wirkungsgrade, d.h. bei schlechtem Übertragungswirkungsgrad ist die Bremsanpresskraft am Bremsbelag schlecht von der aus der Strommessung bestimmten Eingangskraft in die Übertragungselemente abhängig. Es können Nichtlinearitäten oder sogar uneindeutige Zustände herrschen, bei denen von der Eingangskraft schlecht oder nur mehrdeutig auf die Bremsanpresskraft geschlossen werden könnte. Zweideutigkeit kann z.B. bei einer exzenterbetätigten Bremse (wie in der WO 2010/133463 A1) vorliegen, da durch die Geometrie des Exzenters die Eingangskraft anfänglich mit der Bremsanpresskraft ansteigt, dann aber, wenn der Exzenter näher dem bremsscheibennahen Totpunkt kommt, die Eingangskraft durch Selbstverstärkungseffekte in der Reibungsbremse oder durch geeignete geometrische Auslegung wieder absinkt. D.h. zu einer Eingangskraft können zwei Bremsanpresskräfte möglich sein. Es gibt somit keinen einfachen Zusammenhang zwischen der aus der Strommessung bestimmten Eingangskraft und der hervorgerufenen Bremswirkung, was für eine Regelung der Bremswirkung auf Basis der Eingangskraft aber ungünstig ist. Wenn die Reibungsbremse, z.B. durch veränderliche Übersetzungsverhältnisse, Konstantstrom, etc., auf möglichst konstante Elektromotormomente über den Betätigungsweg ausgelegt ist, würde die Strommessung ebenfalls eine konstante Eingangskraft ergeben und somit sogar so gut wie gar nichts mehr aussagen. Weitere ungünstige Einflüsse sind Massenträgheit und die Motorregelung selbst. Wenn Strom zur Überwindung der Massenträgheit des Motors verwendet wird, sagt der Strom alleine nichts über die Bremsanpresskraft aus. Die Motorregelung wird verwendet, um eine bestimmte Position einzuregeln, was in der Regel mit einer PWM (Pulse Width Modulation) Regelung erfolgt. Dabei entstehen Stromimpulse, aber kein messbarer, kontinuierlicher Strom. Eine weitere Problematik bei Strommessung wäre, dass eine Entscheidung, z.B. dass eine bestimmte Bremsanpresskraft erreicht wurde, von einer einzelnen Strommessung abhängt, was fehleranfällig ist. Auch ganz simple Dinge erschweren die Strommessung. Wird ein Zustand z.B. langsam angefahren, ist die Motorleistung und damit die Stromaufnahme geringer, sodass bei der Ermittlung der Bremsanpresskraft auch die Geschwindigkeit berücksichtigt werden müsste. All das führt dazu, dass eine Regelung der Reibungsbremse auf Basis einer einfachen Strommessung im Elektromotor sehr schwierig und daher ungünstig ist.

Die Regelung der Reibungsbremse über den Betätigungsweg wäre zwar einfacher, aber dafür unzuverlässiger, da damit nicht sicher auf das Erreichen einer benötigten Bremswirkung rückgeschlossen werden kann. Z.B. bleibt dabei der Einfluss des Verschleißes der Bremsbeläge oder der sich ändernden Steifigkeiten der Reibungsbremse bei unterschiedlichen Temperaturen unberücksichtigt und es ist nicht sicher gestellt, dass bei Erreichen der vorgegebenen Sollposition auch tatsächlich die angestrebte Bremswirkung erzielt wird.

Aus der DE 10 2011 004 772 A1 geht ein Verfahren zum Einstellen der von einer Feststellbremse ausgeübten Klemmkraft in einem Fahrzeug hervor, bei dem der Zuspannvorgang zum Erzeugen der Klemmkraft soweit durchgeführt wird, bis die dabei erzeugte mechanische Klemmarbeit einen Schwellenwert erreicht. Es wird also die Betätigungsenergie bewertet und solange zugespannt, bis ein Schwellwert erreicht wurde. Das ist eine zwar einfache aber sehr ungenaue Bremsbetätigung, die für eine Feststellbremse ausreichend ist, für eine Betriebsbremse, insbesondere eines Fahrzeuges, aber sicherlich ungeeignet ist, da es dabei auf die genaue und schnelle Erreichung einer Soll-Bremswirkung ankommt. Ein ungewolltes Übersteuern kann zum unerwünschten und gefährlichen Blockieren des Fahrzeugrades führen und ein ungewolltes Untersteuern würde zum Nichterreichen der benötigten Bremswirkung führen.

Es ist daher eine Aufgabe der gegenständlichen Erfindung, ein Verfahren zum Betätigen einer elektrisch betätigten Reibungsbremse anzugeben, mit dem die Bremswirkung der Reibungsbremse in einem bestimmten Arbeitspunkt gezielt beeinflusst werden kann, um das Erzielen einer benötigten Bremswirkung der Reibungsbremse zuverlässig und einfach regeln bzw. kontrollieren zu können.

Diese Aufgabe wird erfindungsgemäß dadurch gelöst, indem für den Bremsvorgang eine Betätigungsenergie des Elektromotors ermittelt wird und und die ermittelte Betätigungsenergie als Ist-Betätigungsenergie in der vorgegebenen Sollposition der Reibungsbremse ermittelt wird und zur Sollposition oder zu einer Soll-Bremswirkung aus bekannten Daten zur Reibungsbremse eine Soll-Betätigungsenergie ermittelt wird und eine Abweichung zwischen Ist-Betätigungsenergie und Soll-Betätigungsenergie durch Betätigen der Reibungsbremse ausglichen wird. Durch die Verwendung der Betätigungsenergie wird die Energie bewertet, die bei Veränderung von einem Anfangszustand der Reibungsbremse (z.B. gelöst) auf einen Endzustand der Reibungsbremse (z.B. Vollbremsung) in die Reibungsbremse eingebracht wird. Bei der Energie spielt es keine Rolle, auf welchen Wegen und in welcher Zeit der Endzustand erreicht wurde, womit die Energie den Endzustand repräsentiert, unabhängig davon, wie dieser erreicht wurde. Eine Summenbildung (oder Integral) zur Ermittlung der Betätigungsenergie ist durch Verwendung vieler Einzelwerte relativ stabil gegen einzelne Messfehler, die sich ausmitteln können, was das Verfahren auch sehr robust gegen allfällige Störungen macht. Auf diese Weise können die Probleme mit einer Strommessung einfach umgangen werden. Abgesehen davon, ist die Ermittlung der Betätigungsenergie einfach und mit wenig Aufwand realisierbar und es gibt eine Reihe von Möglichkeiten, die Betätigungsenergie des Elektromotors zu ermitteln, was eine große Flexibilität in der Umsetzung des Verfahrens ermöglicht. Das ermöglicht eine einfache und zuverlässige Regelung der Betätigung einer elektrisch betätigten Reibungsbremse.

Durch Ermittlung der tatsächlich in die Betätigung gesteckten Betätigungsenergie als Ist-Betätigungsenergie zur Sollposition oder zu einer Soll-Bremswirkung und durch Vergleich mit in einer bekannten, zu erwartenden Soll-Betätigungsenergie, kann eine allfällige Abweichung auf einfache Weise festgestellt werden und durch Betätigen der Reibungsbremse ausglichen werden. Damit kann am Ende des Bremsvorganges auf einfache Weise geprüft werden, ob die vorgegebene Soll-Bremswirkung aus dem Anfahren der Sollposition tatsächlich erreicht wurde, und eine allfällig festgestellte Abweichung korrigiert werden.

Vorteilhaft kann die Reibungsbremse am Ende des Bremsvorganges zum Ausgleich der Abweichung zwischen Ist-Betätigungsenergie und Soll-Betätigungsenergie betätigt werden, um die Soll-Bremswirkung zu erzielen. Damit kann jeder Bremsvorgang gegebenenfalls über die Betätigungsenergie korrigiert werden.

Die Korrektur kann vorteilhaft vorgenommen werden, wenn die Abweichung durch Ändern der Sollposition geändert wird. Ebenso vorteilhaft ist es, aus der Ist-Betätigungsenergie und der Soll-Betätigungsenergie eine Ist-Bremswirkung und eine Soll-Bremswirkung ermittelt wird und eine Abweichung zwischen Ist-Bremswirkung und eine Soll-Bremswirkung ausgeglichen wird. Damit kann in den aktuellen Bremsvorgang auf einfache korrigierend eingegriffen werden.

Vorteilhaft kann auch ein Verschleißnachsteller der Reibungsbremse am Ende des Bremsvorganges betätigt werden, um einen Luftspalt in Abhängigkeit von der Abweichung zwischen Ist-Betätigungsenergie und Soll-Betätigungsenergie zu verändern. Damit wird nicht zwingend in jeden Bremsvorgang eingegriffen, sondern eine allfällige Abweichung kann durch Nachstellen des Verschleißnachstellers ausgeglichen werden. Damit kann die Regelung eines Bremsvorganges vereinfacht werden.

Dazu ist es auch möglich, dass ein Verschleißnachsteller der Reibungsbremse erst nach einer gewissen Zeit nach dem Bremsvorgang betätigt wird, um einen Luftspalt in Abhängigkeit von der Abweichung zwischen Ist-Betätigungsenergie und Soll-Betätigungsenergie zu verändern. Das ermöglicht es, auch den zeitlichen Verlauf der Abweichung zu beurteilen und nur dann einzugreifen, wenn die Abweichung über die Zeit beobachtet wird. Auf diese Weise lassen sich eventuelle Messfehler oder Bremsvorgang bezogene Ungenauigkeiten ausschließen. Dazu werden auftretende Abweichungen vorzugsweise in dieser Zeit gemittelt.

Zur Erreichung einer Sollposition oder Soll-Bremswirkung kann auch vorgesehen sein, für den Bremsvorgang aus einem bekannten Motorbremsmoment des Elektromotors und der Betätigungsenergie ein Energieabsorptionsvermögen der Reibungsbremse vor Erreichen der Sollposition oder Sollbremswirkung zu ermitteln und während des Bremsvorganges die kinetische Energie des Elektromotors mit dem zur aktuellen Position oder Bremswirkung zugehörigen Energieabsorptionsvermögen zu vergleichen und bei Übereinstimmung der Elektromotor auf Abbremsen umzuschalten, um den zeitlichen Verlauf der Bremswirkung zur Erreichung der Sollposition oder Soll-Bremswirkung zu beeinflussen. Auf diese Weise kann eine gewünschte Sollposition oder eine gewünschte Soll-Bremswirkung mit einer gewünschten Restgeschwindigkeit genau, mit optimaler Betätigungsgeschwindigkeit und ohne Überschwingen angefahren werden.

Um eine Bremsenbetätigung zu ermöglichen, wenn die elektrische Versorgung ausfällt, kann vorgesehen sein, die Reibungsbremse mit einer Kombination aus Elektromotor und Hilfsenergiequelle anzutreiben, wobei der Anteil der Hilfsenergiequelle im Bereich von 0 bis 100%, vorzugsweise 20 bis 100%, liegt.

Bei Verwendung der Reibungsbremse in einem Fahrzeug an einem Fahrzeugrad, kann die Soll-Bremswirkung auf eine gespeicherte, von aktuellen Straßenbedingungen abhängige, blockierfreie Bremswirkung, mit der ein Blockieren des Fahrzeugrades verhindert wird, beschränkt werden. Auf diese Weise können Blockierfälle reduziert werden und es kann nahe an der verfügbaren Haftungsgrenze gebremst werden, was das Bremsverhalten des Fahrzeugs generell verbessert.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 ein Beispiel einer elektrisch betätigten Reibungsbremse,
Fig.2 das Kraft-Wegverhalten einer solchen Reibungsbremse,
Fig.3 und 4 die Verwendung der Betätigungsenergie des Elektromotors zur Steuerung der Reibungsbremse und
Fig.5 ein Verfahren zur Steuerung des Elektromotors zum genauen Erreichen einer Sollposition mit einer gewünschten Restgeschwindigkeit.

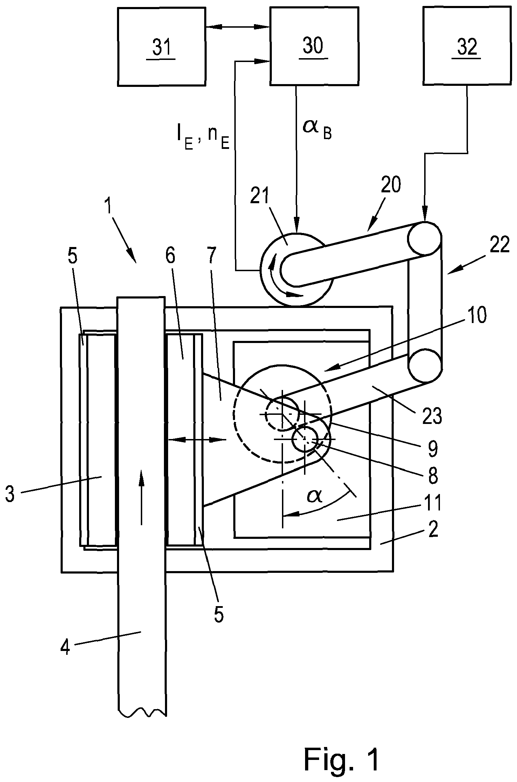

Die Erfindung wird nachfolgend anhand Fig.1 beispielhaft anhand einer schematisch dargestellten elektrisch betätigten Reibungsbremse 1 in Form einer Schwimmsattel-Scheibenbremse näher erläutert. Schwimmsattel-Scheibenbremsen, wie häufig in Fahrzeugen verbaut, sind an sich hinlänglich bekannt, weshalb hier nicht näher auf die Eigenschaften und Funktion einer Schwimmsattel-Scheibenbremse und auf den grundsätzlichen Einbau einer Schwimmsattel-Scheibenbremse, z.B. in einem Fahrzeug, eingegangen wird. Die Erfindung kann aber grundsätzlich auch auf andere Bremsentypen, wie z.B. eine Trommelbremse, angewendet werden. Ebenso kann auch eine andere Reibfläche als eine Bremsscheibe oder eine Bremstrommel vorgesehen sein, z.B. eine mehr oder weniger ebene Fläche, z.B. als Bremse für eine Linearbewegung.

Fig.1 zeigt eine Reibungsbremse 1 mit einem Schwimmsattel 2 als Bremssattel, der eine Reibfläche, hier in Form einer Bremsscheibe 4, umgibt. Am Schwimmsattel 2 ist ein feststehender (bezogen auf den Schwimmsattel 2) Bremsbelag 3 und ein beweglicher (ebenfalls bezogen auf den Schwimmsattel 2) Bremsbelag 6 angeordnet. Der bewegliche Bremsbelag 6 wird zum Bremsen durch eine Andrückeinrichtung 10 gegen die Bremsscheibe 4 gedrückt, wie durch den Doppelpfeil in Fig.1 angedeutet. Dabei zentriert sich der Schwimmsattel 2 selbsttätig, sodass beide Bremsbeläge 3, 6 an der Bremsscheibe 4 anliegen und gegen diese gedrückt werden. Zur Erzielung einer gewünschten Bremswirkung muss ein gewisser Betätigungsweg zur Überwindung der Elastizitäten in der Reibungsbremse 1 zurückgelegt werden. Dieser Zusammenhang bildet sich in einem Kraft-Wegverhalten (oder gleichwertig Momenten-Winkelverhalten) der Reibungsbremse 1 ab. Das Kraft-Wegverhalten einer Reibungsbremse 1 ist aus Prüfstandsversuchen oder Berechnungen bzw. Simulationen anhand der Geometrie der Reibungsbremse 1 bekannt. Durch das Andrücken der Bremsbeläge 3, 6 entsteht die Belagsanpresskraft, die ein bestimmtes Bremsmoment hervorruft. Der Bremsbelag 3, 6 kann dabei auch jeweils auf einem Belagsträger 5 angeordnet sein.

Die Andrückeinrichtung 10 ist an einem Bremsenteil angeordnet. Der Bremsenteil kann der Schwimmsattel 2 sein, kann aber auch, wie hier, ein an sich bekannter Verschleißnachsteller 11 sein. Dabei ist der Verschleißnachsteller 11 am Schwimmsattel 2 angeordnet und die Andrückeinrichtung 10 wiederum am Verschleißnachsteller 11. Die gesamte Andrückeinrichtung 10 wird dabei vom Verschleißnachsteller 11 zum Ausgleich eines entstehenden Verschleißes an den Bremsbelägen 3, 6 bewegt, um den Luftspalt innerhalb bestimmter, vorgegebener Grenzen zu halten. Die Andrückeinrichtung 10 oder der Bremsbelag 3 kann dabei bevorzugt in der Reibungsbremse 1, z.B. wie hier im Schwimmsattel 2, geführt sein. Ein solcher Verschleißnachsteller 11 ist an sich in vielfältiger Ausführung bekannt, weshalb hier nicht näher darauf eingegangen wird. Der Verschleißnachsteller 11 kann entweder nur bei übermäßigem Luftspalt zwischen Bremsbelag 3, 6 und Bremsscheibe 4 zur Nachführung benutzt werden (ähnlich wie bei Trommelbremsen), oder er kann auch kurz vor jeder Bremsbetätigung genutzt werden, um den Luftspalt (auch beide) zwischen Bremsbelag 3, 6 und Bremsscheibe 4 auf Null zu bringen und sogar, um eine erste kleine Andrückkraft in die Reibungsbremse 1 einzubringen. Am Ende der Bremsbetätigung kann der Verschleißnachsteller 11 wieder in eine Position kaum noch vorhandener Restbremswirkung gebracht werden oder bewusst ein Luftspalt eingestellt werden, um den Bremsbelag 3, 6 vollständig von der Reibfläche abzuheben, um damit die Verluste einer minimalen Restbremswirkung zu eliminieren. Dazu kann der Verschleißnachsteller 11 eine bestimmte Position vom Reibkontakt weit weg gefahren werden, oder eine bestimmte Zeit eingeschaltet werden, um den Bremsbelag 3, 6 von der Reibfläche zu entfernen. Für eine Schwimmsattel-Scheibenbremse kann der Verschleißnachsteller 11 auch benutzt werden, um beide Bremsbeläge vollständig von der Bremsscheibe abzuheben, wie z.B. in der WO 2010/133463 A1 näher erläutert ist.

Die Andrückeinrichtung 10, z.B. wie in der WO 2010/133463 A1 näher erläutert, umfasst einen Halteteil 7, an dem der Bremsbelag 6 bzw. dessen Belagsträger 5 anliegt. Im Halteteil 7 ist eine Andrückwelle 8 beidseitig gelagert. Die Andrückwelle 8 ist wiederum in einer als Hohlwelle ausgeführten Betätigungswelle 9 gelagert, wobei die axiale Bohrung in der Betätigungswelle 9 exzentrisch zur Drehachse der Betätigungswelle 9 ausgeführt ist. Die Betätigungswelle 9, die an einem Bremsenteil, hier der Verschleißnachsteller 11, gelagert ist, wird durch ein Betätigungsmittel 20 verdreht, sodass die Andrückwelle 8 durch die exzentrische Bohrung, je nach Drehrichtung, zur Bremsscheibe 4, oder von dieser weg, bewegt wird (angedeutet durch den Doppelpfeil). Die Bremsanpresskräfte werden hier somit über einen Exzenter erzeugt und die zur Betätigung der Bremse benötigte Bremsenergie, außer eventuell auftretende Selbstverstärkungseffekte, wird vom Betätigungsmittel 20, z.B. ein Elektromotor 21, aufgebracht. Anstelle der exzentrisch in der Betätigungswelle 9 gelagerten Andrückwelle 8 könnte auch ein exzentrisch an der Betätigungswelle 9 angeordneter Wellenzapfen, an dem der Halteteil 7 gelagert angeordnet ist, dienen. Ebenso könnte die Andrückeinrichtung 10 in Form einer Nocke, die am Belagsträger 5 oder an einem Halteteil 7 angreift, oder in Form eines Kniehebels ausgeführt sein.

Als Betätigungsmittel 20 ist ein Elektromotor 21 vorgesehen, der hier über ein Gestänge 22 einen an der Betätigungswelle 9 angeordneten Betätigungshebel 23 verdreht. Selbstverständlich könnte auch jeder andere geeignete Antrieb als Betätigungsmittel 20 in Frage kommen, so z.B. ein Elektromotor, der die Betätigungswelle 9 direkt, über ein Getriebe oder einen Rollenschlepphebel antreibt. Die Andrückeinrichtung 10 hat dabei einen gewissen, festgelegten Arbeitsbereich, hier z.B. in Form eines Betätigungswinkelbereiches des Betätigungsteils, z.B. der Betätigungswelle 9. Der Arbeitsbereich wird dabei vorteilhaft so gewählt, dass sich günstige Übersetzungsverhältnisse zur Erzeugung der Bremswirkung ergeben.

Natürlich können die Bremsanpresskräfte in der vom Elektromotor 21 betätigten Reibungsbremse 1 auch mit einer Andrückeinrichtung mit anderen bekannten Mitteln erzeugt werden, wie z.B. Schrauben, Wälzkörper in Gewindegängen (z.B. Kugelspindeln), Keilen, Verdrehung von Kugelrampen, Drücke von Gasen oder Flüssigkeiten, etc.

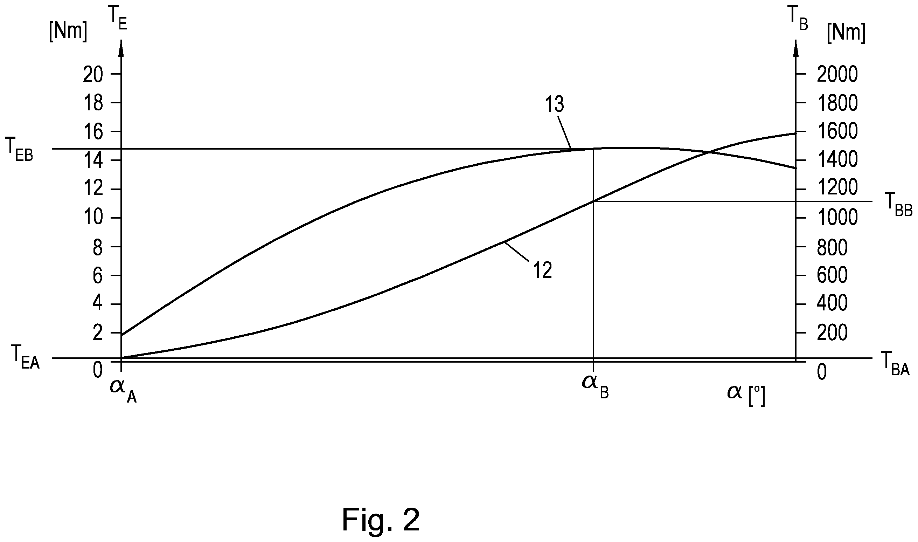

Solche Reibungsbremsen 1 können ein nichtlineares Kraft-Wegverhalten aufweisen, also Kennlinien, die keinen linearen Zusammenhang zwischen der Bremswirkung, hier z.B. Bremsmoment T_{B} (Kurve 12), und dem Betätigungsweg, hier z.B. Betätigungswinkel α, wie in Fig.2 beispielhaft dargestellt. Ebenso ist in Fig.2 das Betätigungsmoment T_{E} (Kurve 13), das vom Elektromotor 21 zur Erzielung der Bremswirkung aufgebracht werden muss, dargestellt. Durch Selbstverstärkungseffekte oder entsprechender geometrischer bzw. kinematischer Auslegung der Reibungsbremse 1 kann das Betätigungsmoment T_{E} ab einem bestimmten Betätigungswinkel α auch wieder absinken, wie in Fig.2 ersichtlich. Daraus ergibt sich auch unmittelbar ein Zusammenhang zwischen Betätigungsmoment T_{E} und erzieltem Bremsmoment T_{B}. Diese Kurven sind für eine Reibungsbremse 1 bekannt, z.B. aus entsprechenden Prüfstandversuchen, aus Simulationen oder aus Berechnungen. In der Regel gibt es jedoch eine ganze Kurvenschar aus solchen Kurven 12, 13, um verschiedene Einflüsse, wie z.B. Verschleiß der Bremsbeläge oder Temperatur, zu berücksichtigen.

Die Reibungsbremse 1 wird z.B. von einer Bremsenregeleinheit 30 gesteuert, wie nachfolgend im Detail ausgeführt wird. Die Bremsenregeleinheit 30 kann dabei mit einer übergeordneten Steuereinheit 31, z.B. einem Fahr- oder Bremsassistenzsystem (ABS, ESP, etc.) in Fahrzeugen oder einer Maschinensteuerung (z.B. Aufzug, Kran), verbunden sein, oder kann von anderer Quelle, z.B. einem Bremspedal, einen "Bremswunsch" erhalten. Ein "Bremswunsch" wird dabei so verstanden, dass von der Reibungsbremse 1 als Reaktion auf ein bestimmtes Ereignis, z.B. Fahrer tritt auf Bremspedal, Fahrassistenzsystem wird aktiviert, Maschinensteuerung signalisiert Bremsung, etc., eine bestimmte Bremswirkung gefordert wird. Die Sensoren zur Erfassung der für die Regelung benötigten Messwerte, wie z.B. Motorstrom I_{E} oder Motordrehzahl n_{E} sind aus Gründen der Übersichtlichkeit nicht dargestellt.

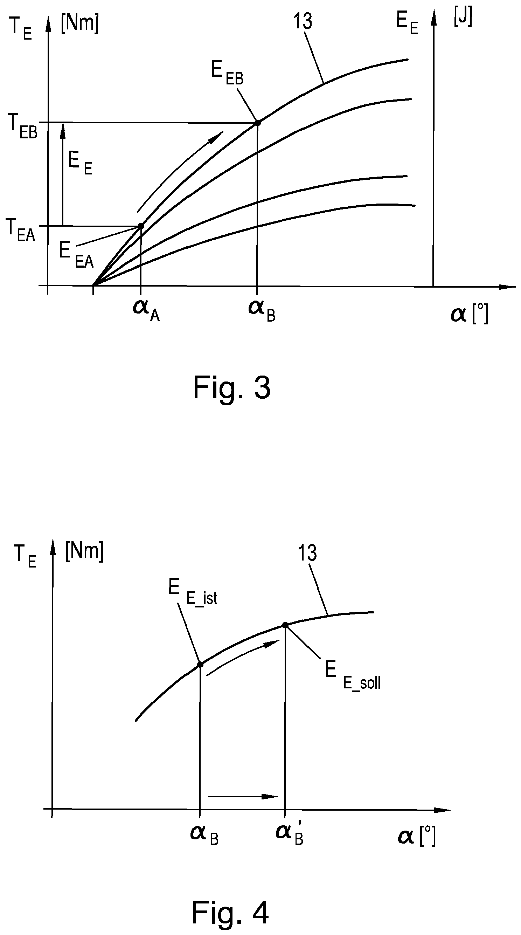

Ein Bremsvorgang startet bei einem Anfangsbremsmoment T_{BA,} das mit einem bestimmten Anfangsbetätigungsmoment T_{EA} und mit einem bestimmten Anfangsbetätigungswinkel α_{A} erzielt wird. Der Anfangszustand kann z.B. "Bremse vollkommen gelöst", also T_{BA}=0, sein, oder ein allgemeiner Anfangswert wie im Beispiel der Fig.2 und 3. Die Bremswirkung soll mit der Andrückeinrichtung 10 bis zu einem Soll-Bremsmoment T_{BB}, das mit einem bestimmten Soll-Betätigungsmoment T_{EB} und das sich aus dem Bremswunsch ergibt, gesteigert werden. Der zum Soll-Bremsmoment T_{BB} zugehörige Bremsbetätigungswinkel α_{B} kann aus dem bekannten Kraft-Wegverhalten der Reibungsbremse 1 ermittelt werden, z.B. aus hinterlegten Tabellen oder Kurven. Dieser Soll-Bremsbetätigungswinkel α_{B} wird von der Bremsenregeleinheit 30 angefahren. Um sicherzustellen, dass die erwünschte Bremswirkung, hier in Form des Soll-Bremsmoments T_{B}, erreicht wird, wird nun die während des Bremsvorgangs aufgebrachte Betätigungsenergie E_{E}, z.B. die mechanische Motorenergie des Elektromotors 21 (angedeutet durch den Pfeil in Fig.3) oder äquivalent die elektrische Energie des Elektromotors 21, ermittelt und die Bremswirkung gegebenenfalls korrigiert. Die ermittelte Betätigungsenergie E_{E} der Reibungsbremse 1 kann aber auch dazu verwendet werden, um die Bremswirkung der Reibungsbremse 1 während des Bremsvorgangs gezielt zu beeinflussen, z.B. in einer Regelung der Reibungsbremse 1, wie weiter unten ausgeführt.

Die Betätigungsenergie E_{E} kann dabei auf unterschiedliche aber auf relativ einfache Weise ermittelt werden. Nachdem die Energie das zeitliche Integral, bzw. die Summe, der Augenblicksleistung ist, die sich wiederum aus Drehmoment multipliziert mit der Drehzahl des Elektromotors 21 ergibt, kann die mechanische Motorenergie als Betätigungsenergie E_{E} einfach ermittelt werden. Die Drehzahl n_{E} des Elektromotors 21 ist mittels geeigneter Drehzahlgeber, die ohnehin standardmäßig im Elektromotor 21 verbaut sein können, ermittelbar. Das Drehmoment T_{E} des Elektromotors 21 kann aus einer elektrischen Größe ermittelt werden, z.B. Motorstrom mal bekannter Drehmomentkonstante des Elektromotors 21. Eine Anbringung von Kraft.- oder Momentsensoren wäre zwar genauso möglich, aber teuer und daher in den meisten Fällen unvorteilhaft. Daher wird die Methode der Drehmomentkonstanten bevorzugt, weil die Drehmomentkonstante über weite Motorbereiche meist gut linear den Zusammenhang zwischen Strom und Moment beschreibt. Ebenfalls kann auf das Drehmoment T_{E} auch über die bekannte mechanische Motorkennlinie des Elektromotors 21 geschlossen werden, die angibt, welche Drehzahl n_{E} sich bei welchem Drehmoment T_{E} ergibt. Daraus kann das zur Drehzahl n_{E} zugehörige Drehmoment T_{E} in der Motorkennlinie, oder in entsprechenden Tabellen, nachgeschlagen werden. Wenn nötig kann die augenblicklich herrschende Motorspannung auch zur Verbesserung der Genauigkeit verwendet werden, in dem mit der Spannung z.B. eine Korrektur berechnet wird, in dem z.B. Motorkennlinien für verschiedene Spannungen angelegt werden oder ein Faktor die Veränderung mit der Spannung angibt oder mit der Drehzahkonstanten des Elektromotors 21 eine Korrektur berechnet wird.

Alternativ könnte über Motorstrom und Motorspannung auch die elektrische Augenblicksleistung ermittelt und daraus über den Motorwirkungsgrad die mechanische Leistung berechnet werden. Dabei kann der Motorwirkungsgrad z.B. konstant angenommen werden oder aus einer vorgegebenen Kurve oder Tabelle abgelesen oder berechnet werden. Die Leistung des Elektromotors hängt bekanntermaßen von der Temperatur (Magnetmaterial, Kupferwiderstand) und anderen Faktoren, wie z.B. Alter ab. Diese Einflüsse, die wiederum in Form von Kurven oder Tabellen hinterlegt sein könnten, könnten dabei als Korrekturfaktoren verwendet werden. Als Betätigungsenergie E_{E} könnte aber auch direkt die elektrische Motorenergie herangezogen werden.

Aus den Augenblicksleistungen kann dann durch Integration oder durch Summenbildung die Betätigungsenergie E_{E} z.B. in Form der mechanischen Motorenergie, ermittelt werden, die aufgewendet wurde, um die Reibungsbremse 1 vom Anfangszustand α_{A} in den Sollzustand α_{B} zu bringen. Bei Mikroprozessoren, wie in heutigen Bremsensteuerungen üblich, ist eine Summenbildung natürlich interessanter. Dazu kann ein geeignetes Raster, wie z.B. ein Zeitraster, ein Raster, auf das die Berechnungen bezogen werden, also z.B. Längen- oder Winkelschritte oder willkürliche Schritte wie Motorumdrehungen, oder sogar ein statistisch zufälliges Raster, gewählt werden, in dem die Augenblicksleistungen ermittelt werden, diese mit den Zeitabständen multipliziert werden und daraus eine laufende Summe gebildet wird. Die Multiplikation mit den Zeitabständen kann einfachheitshalber auch unterbleiben, dann ist die Energie ein relativer Wert, der aber ebenfalls verwendet werden kann. Das Raster wird dabei natürlich so gewählt, dass es keine nachteiligen Wechselwirkungen hervorruft. Z.B. kann das Zeitraster mit dem Zeitraster zusammenfallen, das zum Schalten der Motorströme verwendet wird oder dazu in einem Verhältnis steht. Es kann z.B. im PWM-Zeitraster, das die Einschaltimpulse vorgibt, der Strom (und gegebenenfalls auch die Spannung) und die Drehzahl n_{E} einmalig oder mehrmals gemessen werden, um daraus die Augenblicksleistungen zu berechnen.

Da es viele physikalische Möglichkeiten der Energieberechnung gibt, z.B. Kraft * Weg, Drehmoment * Winkel, elektrische Verfahren, Berechnung über Leistungen, etc., kann natürlich jede physikalisch mögliche Berechnung genutzt werden. Die Berechnungsschritte können auf Zeitschritte, Positionsschritte und sogar Zufallsschritte bezogen werden und auch Verfahren ohne Schritte, wie z.B. Integral und Differentialrechnungen, sind genauso möglich wie Durchschnittswerte oder repräsentative Werte, da immer das genannte Energieprinzip vorliegt. Es sind auch äquivalente, vereinfachte Berechnungen denkbar. Wenn Energie z.B. Kraft * Weg ist, dann kann z.B. auch die Kraftsumme verwendet werden, oder die Stromsumme bei einem elektrischen Verfahren. Ebenso kann die Energie auf nicht-physikalische Einheiten bezogen werden, wie z.B. Motorschritte.

Die Bremsbetätigung wird auch unerwünschte Reibungsverluste haben, die auch über die Zeit, z.B. über die Lebensdauer, oder in Abhängigkeit von der Temperatur veränderlich sein können. Damit kann die zu einer bestimmten Bremswirkung nötige Betätigungsenergie durch z.B. Alterung oder in Abhängigkeit von der Temperatur schwanken. Dies kann bei der Ermittlung der Betätigungsenergie kompensiert werden oder sogar sinnvoll verwendet werden. Beispielsweise kann die zur Betätigung benötigte Energie und auch auch die zum Lösen der Reibungsbremse 1 benötigte Energie gemessen werden. Die Differenz daraus ist ein Maß für die unerwünschten Verluste der Bremsbetätigung. Aus Kenntnis der unerwünschten Verluste kann z.B. entweder ein Signal augegeben werden, das z.B. Wartung oder Diagnose bezweckt, oder auch eine Korrektur erzeugt werden. Damit kann beispielsweise die Soll-Bremsbetätigungsenergie in Abhängigkeit von den Verlusten korrigiert werden, um die angestrebte Soll-Bremswirkung zu erzielen. Die Abhängigkeit kann wiederum in Form von Tabellen, formelmäßigen Zusammenhängen, Modellen oder ähnlichem hinterlegt sein. Dabei können auch normale Veränderungen in der Reibungsbremse 1 mit berücksichtigt werden, beispielsweise, dass heiße Bremsbeläge 3, 6 weicher sind, als kalte und sich also mit der Bremsbelags- oder Reibflächentemperatur die Steifigkeit und damit auch Betätigungsenergie ändert. Gleichfalls kann auch berücksichtigt werden, dass das Fett in den Lagern der Reibungsbremse 1 bei Kälte die Betätigung schwergängiger macht.

Auch ist eine "Nachkalibrierung" des Verfahrens im laufenden Betrieb, z.B. über die Kennlinien oder Parameter, denkbar, indem z.B. der Schlupf der Fahrzeugräder oder die Fahrzeugverzögerung (oder allgemein die Verzögerung des zu bremsenden Gegenstandes) beim Bremsen beobachtet wird und aus der geforderten Soll-Bremswirkung und dem resultierenden Schlupf darauf geschlossen wird, dass die Reibungsbremsen 1 zu viel oder zu wenig bremsen und daraus eine Verschleißnachstellung bzw. Korrektur der Bremswirkung erfolgt. In einer vereinfachten Darstellung könnte man z.B. beobachten, ob bei einem Fahrzeug längerfristig auf der linken und rechten Fahrzeugseite der gleiche Schlupf eintritt und bei Abweichung eine Korrektur machen. Es können die Reibungsbremsen 1 relativ zueinander "nachkalibriert" werden oder auch bezüglich des Gesamtverhaltens.

Elektromechanische Bremsen werden fallweise auch über Spannkraftsensoren gesteuert. Dies könnte hier mitverwendet werden, z.B. aus Sicherheitsgründen zur Ermittlung möglicherweise falscher Messergebnisse. Dazu können weitere Sensoren (z.B. Spannkraftsensor, Kraft oder Momentsensor im Betätigungsantrieb der Bremse, Mitnahmesensor an einem Bremsbelag, etc.) angeordnet werden. Bei Abweichungen oder erkannten Fehlern können Maßnahmen getroffen werden, wie z.B. Serviceaufforderung, Abschaltung einer fehlerhaften Reibungsbremse 1, weiterarbeiten mit dem nicht fehlerhaften Signal usw.

Wird die am Beginn des Bremsvorgangs eingebrachte Betätigungsenergie E_{EA}, die auch Null sein kann, von der am Ende des Bremsvorganges festgestellten Betätigungsenergie E_{EB} abgezogen, erhält man die Betätigungsenergie E_{E}, die aufgewendet werden musste, um die vorgegebene Sollposition, z.B. wie hier den vorgegebenen Soll-Bremsbetätigungswinkel α_{B}, einzustellen (Fig.3). Daraus kann auf die aktuelle Bremswirkung, z.B. Bremsmoment oder Bremsanpresskraft, rückgeschlossen werden. Im einfachsten Fall wird dazu aus dem Energieerhaltungssatz geschlossen, dass die eingebrachte Betätigungsenergie E_{E} auch als Andrückenergie zwischen Bremsbelag 6 und Reibfläche eingebracht wurde. Die Andrückenergie ergibt sich aber als Produkt aus Bremsanpresskraft und dem Weg den der Bremsbelag 6 zurückgelegt hat. Nachdem der vom Bremsbelag 6 zurückgelegte Weg anhand des Anfangs- Bremsbetätigungswinkels α_{A} und des Soll-Bremsbetätigungswinkels α_{B} und der Geometrie bzw. Kinematik der Andrückeinrichtung 10 wiederum bekannt ist, kann daraus mit dem bekanntem elastischen Verhalten der Bremsenteile (das z.B. aus Messungen, Simulationen oder Modellen der Reibungsbremse 1 bekannt ist) die Bremsanpresskraft oder über den Zusammenhang mit dem Reibwert auch das Bremsmoment, also allgemein die Bremswirkung, berechnet werden. Dabei können natürlich noch Einflüsse wie Reibungsverluste, Hysterese (unterschiedliche Betätigungskräfte für Erhöhen und Verringern der Bremswirkung) in der Reibungsbremse 1 oder Selbstverstärkung, etc. berücksichtigt werden.

Aus bekannten Daten zur Reibungsbremse 1, wie z.B. Kraft-Wegverhalten (z.B. Fig.2), Geometrie, etc., kann aber auch entnommen werden, wie viel Betätigungsenergie E_{E_soll} aufgewendet werden muss, um die Reibungsbremse 1 von einer Anfangsposition, z.B. gegeben durch einen Anfangsbetätigungswinkel α_{A}, in eine Sollposition, z.B. gegeben durch einen Soll-Bremsbetätigungswinkel α_{B}, zu bringen. Z.B. kann zu jedem Punkt des Kraft-Wegverhalten (Kurve 13 in Fig.2) die jeweilige Betätigungsenergie E_{E} hinterlegt sein, wie in Fig.3 angedeutet. Diese Daten können in geeigneter Form in der Bremsenregeleinheit 30 hinterlegt sein, z.B. in Form von Tabellen, Kurven, Formeln, Simulationen, neuronalen Netzwerken, Fuzzy-Logic etc. Auch Temperaturen und andere Einflüsse, wie z.B. Verschleiß der Bremsbeläge 3, 6, können dabei über verschiedene Kurven oder in Kompensationsberechnungen berücksichtigt werden. Die zu erwartende Betätigungsenergie E_{E_soll} für eine bestimmte Sollposition, z.B. ein Soll-Bremsbetätigungswinkel α_{B}, kann daher aus diesen Daten ermittelt werden. Wird nun im oben beschriebenen Verfahren die am Beginn der Bremsung eingebrachte Betätigungsenergie E_{EA} von der am Ende der Bremsung festgestellten Betätigungsenergie E_{EB} abgezogen, erhält man die Ist-Betätigungsenergie E_{E_ist}, die tatsächlich aufgewendet wurde, um den vorgegebenen Soll-Bremsbetätigungswinkel α_{B} einzustellen (Fig.4). Wenn die Soll-Betätigungsenergie E_{E_soll} von der gemessenen Ist-Betätigungsenergie E_{E_ist} abweicht, wobei ein gewisses Toleranzfenster definiert sein kann, kann die Reibungsbremse 1 zur Erzielung der Soll-Bremswirkung nachgeführt werden. Dazu wird das Zuviel oder Zuwenig an Bremswirkung, das sich aus dem Unterschied zwischen Soll- und Istenergie ergibt, durch Betätigen der Reibungsbremse 1 ausgeglichen, sodass Soll-Betätigungsenergie E_{E_soll} und Ist-Betätigungsenergie E_{E_ist} übereinstimmen, gegebenenfalls wiederum innerhalb eines gewissen Toleranzbereichs. Z.B. könnte die Bremsenregeleinheit 30 die Sollposition verändern, z.B. etwas mehr (oder weniger) Soll-Bremsbetätigungswinkel α_{B}' vorgeben, oder der Verschleißnachsteller 11 könnte betätigt werden, um einen zu großen Luftspalt, der in einer zu geringen Bremswirkung resultiert, auszugleichen. Für den aktuellen Bremsvorgang könnte z.B. die Sollposition geändert werden, z.B. der Soll-Bremsbetätigungswinkel α_{B} auf den Soll-Bremsbetätigungswinkel α_{B}' vergrößert werden, um die gewünschte Soll-Bremswirkung doch zu erzielen, und nach dem Bremsvorgang könnte der Verschleißnachsteller 11 betätigt werden, um den Luftspalt nachzuführen. Bei diesem "statischen" Verfahren wird am Ende des Bremsvorganges, also bei Stillstand des Elektromotors 21 die zugeführte Ist-Betätigungsenergie E_{E_ist} mit der bekannten Soll-Betätigungsenergie E_{E_soll} verglichen und daraus abgeleitet die Bremswirkung der Reibungsbremse 1 beeinflusst, um die gewünschte Soll-Bremswirkung zu erreichen.

Die Erkenntnisse aus der Ermittlung der Betätigungsenergie E_{E} müssen aber nicht sofort zu Eingriffen in die Reibungsbremse 1 führen. Man kann z.B. die Erkenntnis, dass Verschleiß an den Bremsbelägen 3, 6 zu weniger Energieaufnahme geführt hat über einen längeren Zeitraum mitteln oder tolerieren und erst nach einer gewissen Zeit den Verschleißnachsteller 11 aktivieren. Auch könnte eine Verschleißwarnung ausgegeben werden, um einen bevorstehenden Wechsel der Bremsbeläge 3, 6 anzuzeigen, oder eine Fehlfunktion in der Reibungsbremse 1 erkannt und eventuell ausgegeben werden. Wenn keine sinnvolle Nachstellung des Verschleißnachsteller 11 angefordert wird, beispielsweise eine nicht mit den Bremsungen oder einem Verschleißmodell übereinstimmende, eine unstetige oder sprunghafte, kann z.B. auf fehlerhafte Lagerstellen, Spiel usw. geschlossen werden und Maßnahmen wie z.B. eine Serviceanforderung ergriffen werden. Auch eine Statistik oder Aufzeichnung über die Bremsvorgänge kann mitgeführt, verwendet oder ausgegeben werden, um damit Diagnosen an der Reibungsbremse 1 zu unterstützen.

Das Nachstellen des Verschleißnachstellers 11 aufgrund einer Abweichung zwischen Ist-Betätigungsenergie E_{E_ist} und Soll-Betätigungsenergie E_{E_soll}, oder einer über einen Zeitraum gemittelten Abweichung, kann bei Betätigen einer Parkbremsfunktion, beim Starten des Fahrzeugs oder eines sonstigen zu bremsenden Gegenstandes, bei günstigen Gelegenheiten, wie z.B. Stillstand, nach dem Service, etc., oder auch bei bestimmten Bremsungen vorgenommen werden. Es können aber auch bestimmte Bremsungen, wie z.B. Vollbremsungen, ABS- oder ESP-Eingriffe, aus der Verschleißnachstellermittlung ausgeschlossen werden.

Die ermittelte Betätigungsenergie E_{E} kann aber auch genutzt werden, um während der Betätigung der Reibungsbremse 1 die Bremswirkung "dynamisch" zu beeinflussen. Z.B. erhält man dadurch die Möglichkeit, die Bremswirkung unmittelbar zu regeln. Damit muss kein Soll-Bremsbetätigungswinkel α_{B} mehr vorgegeben werden, sondern es kann unmittelbar eine Soll-Bremswirkung, z.B. in Form eines Soll-Bremsmoments T_{BB} vorgegeben werden. Über die oben beschriebene Ermittlung der aktuellen Bremswirkung kann ein entsprechender Regelkreis geschlossen werden, um die erzielte Bremswirkung so zu beeinflussen, dass sich die gewünschte Soll-Bremswirkung ergibt. Dazu kann laufend die aktuelle Bremswirkung zum aktuellen Betätigungsweg wie oben beschrieben ermittelt werden und die Betätigung der Reibungsbremse 1 geregelt werden, um die Soll-Bremswirkung zu erzielen.

Bei direkter Regelung der Bremswirkung oder bei Regelung der Bremswirkung über den Betätigungsweg ist in der Bremsenregeleinheit 30 ein geeigneter Regler, z.B. ein PID-Regler, implementiert. Aus der grundlegenden Anforderung an die Bremsenregeleinheit 30, den geforderten Sollzustand, in dem die Motordrehzahl n_{E}=0 sein soll, möglichst rasch zu erreichen, wird sich im Regelverhalten immer ein gewisses suboptimales Verhalten einstellen, bis die Soll-Bremswirkung erreicht wird. Der PID-Regler kann z.B. zu langsam ausgelegt werden oder zu schnell, und dabei ein Überschwingen bewirken. Auch der sogenannte aperiodische Grenzfall, der weder zu schnell noch zu langsam ist, läßt sich, wie gezeigt wird, verbessern. Da in der Regel der Bremswunsch rasch umgesetzt werden soll, wird man an einer grundsätzlich schnellen Auslegung des Reglers interessiert sein, was zum angesprochenen Überschwingen führt.

Ein Überschwingen der Bremsenregelung verursacht aber durchaus gewisse Probleme. Einerseits wird dabei bei jeder Bremsung unnötig elektrische Energie verbraucht, was insbesondere bei Hybrid- oder Elektrofahrzeugen unerwünscht ist. Andererseits kann durch das Überschwingen passieren, insbesondere beim Öffnen der Bremse, dass der Halteteil 7 mit dem Bremsbelag 6 mit hoher Geschwindigkeit gegen den Endpositionsanschlag fährt. Das kann zu Beschädigungen in der Reibungsbremse 1 führen, stellt aber durch die entstehenden Geräusche in einem Fahrzeug auch ein Problem für den Fahrkomfort dar. Das lässt sich durch einen Kompromiss zwischen Betätigungszeit und Überschwingen zwar verbessern, aber nicht ganz eliminieren. Auch komplexere Regelalgorithmen sind denkbar, aber aufgrund der höheren Rechenanforderungen, insbesondere in Fahrzeugen, eher nicht erwünscht. Durch gezielte Beeinflussung der Bremswirkung auf Basis der aufzubringenden Betätigungsenergie E_{E}, kann aber auch dieses Problem behoben werden, wie nachfolgend ausgeführt.

Das Ziel dabei ist, eine bestimmte Sollposition, z.B. einen Soll-Bremsbetätigungswinkel α_{B}, mit einer gewissen Restgeschwindigkeit zu erreichen. In der Regel wird erwünscht sein, dass die Restgeschwindigkeit Null ist, d.h. dass bei Erreichen der Sollposition in der Reibungsbremse 1 keine kinetische Energie E_{K}, z.B. in Form von Rotationsenergie bei laufendem Elektromotor 21 enthalten ist, die Andrückeinrichtung 10 bzw. der Elektromotor 21 in der Sollposition also zum Stillstand kommt. Gleichermaßen ist es aber auch denkbar, die Sollposition mit einer gewissen Restgeschwindigkeit zu erreichen. Die vorhandene kinetische Energie E_{K} aus der Bremsenbetätigung soll also abgebaut werden, um die Restgeschwindigkeit zu erreichen.

Dazu ist anzumerken, dass es für das beschriebene Verfahren zur Vereinfachung zulässig ist, die kinetische Energie E_{K} auf die Rotationsbewegung des Elektromotors 21 zu reduzieren, obwohl natürlich auch in der Bewegung der Andrückeinrichtung und des Bremsbelags 3, 6 kinetische Energie steckt. Allerdings dominiert die kinetische Energie des Elektromotors 21 deutlich, sodass durch diese Vereinfachung nur ein sehr geringer, vernachlässigbarer Fehler entsteht. Selbstverständlich wäre es aber möglich, auch die Bewegungsenergien anderer Komponenten der Reibungsbremse 1, wie z.B. eines Getriebes, eines Hebels, etc., zu berücksichtigen.

Aus dem Obigen ist auch klar, dass Sollposition und Soll-Bremswirkung gleichwertig sind und über einen bekannten Zusammenhang austauschbar sind. Obwohl im Folgenden immer von Positionen gesprochen wird, könnte im nachfolgend beschriebenen Verfahren anstelle von Position auch die Bremswirkung verwendet werden.

Zunächst wird folgende Überlegung angestellt. Der Elektromotor 21 muss zur Betätigung der Reibungsbremse 1 zuerst beschleunigt und zum Erreichen der Sollposition, z.B. des Soll-Bremsbetätigungswinkels α_{B}, gebremst werden, was z.B. durch Anlegen eines Motorbremsstromes, was ein Motorbremsmoment bzw. eine Motorbremsenergie E_{B} ergibt, erfolgen kann. Nachdem die Bremsstrategie des Elektromotors bekannt ist, kann auch das damit erzeugte Motorbremsmoment bzw. die Motorbremsenergie E_{B} zu jedem Zeitpunkt als bekannt vorausgesetzt werden. Im einfachsten Fall kann ein Konstantbremsstrom, was in etwa ein Konstantbremsmoment ergibt, angelegt werden. Ebenso ist aus dem Kraft-Wegverhalten der Reibungsbremse 1 bekannt, welche Betätigungsmomente T_{E}, und damit über den Zusammenhang Energie = Drehmoment * Winkel auch welche Betätigungsenergie E_{E}, vor Erreichen des Soll-Bremsbetätigungswinkels α_{B} aufgebracht werden. Diese beiden Energien, also die Motorbremsenergie E_{B} und die Betätigungsenergie E_{E} vor dem Soll-Bremsbetätigungswinkel α_{B}, werden in Summe als Energieabsorptionsvermögen E_{V} der Reibungsbremse 1 angesehen. Durch das Energieabsorptionsvermögen E_{V} kann die jeweils vorliegende kinetische Energie des Elektromotors 21, bis auf eine eventuell erwünschte durch eine Restgeschwindigkeit bewirkte Restenergie abgebaut werden, wenn der Elektromotor 21, bzw. das Motormoment, entlang des Energieabsorptionsvermögens Eᵥ geregelt wird.

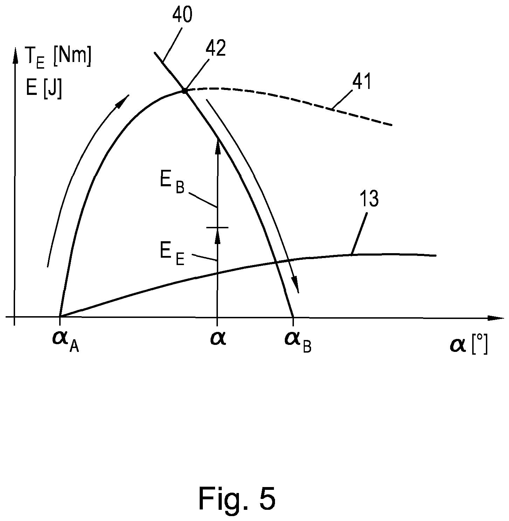

Das Energieabsorptionsvermögen E_{V} kann nun für jeden Soll-Bremsbetätigungswinkel α_{B} zurückgerechnet werden, z.B. indem in gewissen Betätigungswinkelschritten ausgehend vom Soll-Bremsbetätigungswinkel α_{B} jeweils für den betrachteten Betätigungswinkel α die vorliegende Motorbremsenergie E_{B} und Betätigungsenergie E_{E} berechnet wird, wie in Fig.5 dargestellt. Auf diese Weise kann ausgehend vom Soll-Bremsbetätigungswinkel α_{B} eine Kurve für das Energieabsorptionsvermögen E_{V} ermittelt werden, wie in Fig.5 durch die Kurve 40 dargestellt.

In Fig.5 ist in Form der Kurve 41 auch die kinetische Energie E_{K} des Elektromotors 21 (Rotationsenergie = bekanntes Massenträgheitsmoment * Winkelgeschwindigkeit zum Quadrat) über den Bremsvorgang dargestellt. Hier ist anzumerken, dass im Fall der Restgeschwindigkeit Null im Soll-Bremsbetätigungswinkel α_{B} natürlich auch die kinetische Energie Null wäre. Mit Aufrechterhaltung einer gewünschten Restgeschwindigkeit würde am Ende des Bremsvorganges noch kinetische Energie E_{K} in der Reibungsbremse 1 stecken.

Für einen Bremsvorgang wird nun für den gewünschten Soll-Bremsbetätigungswinkel α_{B} das Energieabsorptionsvermögen E_{V} ermittelt, was keine rechenaufwändige Angelegenheit ist und daher in der verfügbaren Zeit möglich ist, z.B. in der Bremsenregeleinheit 30. Das kann vor Beginn des Bremsvorganges oder während der Bremsbetätigung erfolgen. Gleichzeitig wird für den Bremsvorgang laufend oder vorab die kinetische Energie E_{K} des Elektromotors 21 ermittelt. Die kinetische Energie E_{K} kann aus Messwerten berechnet werden, anhand eines Modells vorhergesagt werden, simuliert werden oder auch aus Tabellen entnommen werden. Wie die kinetische Energie E_{K} letztendlich tatsächlich bestimmt wird, spielt für das hier vorgestellte Verfahren aber keine Rolle. Wenn die kinetische Energie E_{K} das Energieabsorptionsvermögen E_{V} schneidet (Umschaltpunkt 42), wenn also gilt kinetische Energie E_{K} = Energieabsorptionsvermögen E_{V}, wird der Elektromotor 21 auf Abbremsen der Betätigungsbewegung umgeschaltet, der damit Motorbremsenergie E_{B} einbringt. Die Bremsenbetätigung folgt nun dem Energieabsorptionsvermögen E_{V}. Auf diese Weise wird sichergestellt, dass der Soll-Bremsbetätigungswinkel α_{B}, und damit auch die erwünschte Bremswirkung, mit der gewünschten Restgeschwindigkeit erreicht wird, und zwar ohne Überschwingen oder zu langsamer Annäherung. Durch dieses Verfahren wird der zeitliche Verlauf der Bremswirkung beeinflusst, um die Sollposition mit einer Restgeschwindigkeit zu erreichen.

Diese Restgeschwindigkeit kann Null sein, wenn man genau in diesem Punkt die Andrückeinrichtung 10, bzw. den Elektromotor 21 und die Bremsenbetätigung, anhalten will. Tatsächlich könnte eine größere Geschwindigkeit als Null ebenfalls interessant sein, um die vorgegebene Sollposition langsam zu durchfahren, um z.B. zu beobachten, ob durch das Bremsen ein Blockieren des Rades eines Fahrzeuges ausgelöst wird. In diesem Falle kann aufgrund der vorherrschenden geringen Betätigungsgeschwindigkeit möglichst gut oder schnell auf das Blockieren (oder frühe Anzeichen dafür, wie z.B. steigender Schlupf) reagiert werden. Man kann natürlich auch eine Position vor der Sollposition anfahren und dann mit kleiner Restgeschwindigkeit genau auf die gewünschte Sollposition fahren.

Das obige Verfahren zur Zielerreichung der Sollposition kann natürlich mit einem anderen beschriebenen Verfahren kombiniert werden. Z.B. kann bei Erreichen der Sollposition anhand der erreichten Betätigungsenergie E_{E} geprüft werden, ob die gewünschte Bremswirkung tatsächlich erzielt wurde. Falls nicht, kann die Bremswirkung wie beschrieben korrigiert werden. Hierzu kann es vorteilhaft sein, von vornherein eine kleine Restgeschwindigkeit vorzusehen. Gleichfalls ist es denkbar, zuerst eine Position vor der eigentlichen Sollposition mit dem Verfahren zur Zielerreichung anzufahren und dann auf die Regelung der Bremswirkung umzuschalten.

Der Bremswunsch kann in einem Fahrzeug wie beschrieben z.B. vom Fahrer oder einem Fahrzeugsystem (z.B. Notbremsung) stammen. Generell muss davon ausgegangen werden, dass die damit vorgegebene Soll-Bremswirkung zum Blockieren eines Fahrzeugrades führen könnte. Blockieren kann wie bekannt im Voraus erkannt werden, z.B. an steigendem Radschlupf, es kann jedoch auch unerkannt einsetzen. Wenn sich die Andrückeinrichtung 10 bei einsetzendem Blockieren noch in Bewegung befindet, kann das Blockieren nur bestmöglich verhindert oder abgestellt werden, in dem z.B. die Bremsbetätigung schnellst möglichst beendet wird. Dann wird die Bremsbetätigung von der Bremsenregeleinheit 30 wieder zurückgefahren, bis das Blockieren beendet ist, oder der Radschlupf auf ein tolerierbares Maß reduziert ist. Doch damit eröffnet sich die Möglichkeit, den Zustand Blockieren in der Regelung der Reibungsbremse 1 zu berücksichtigen. Der Betätigungszustand der Reibungsbremse 1, z.B. Betätigungswinkel, Bremswirkung, bei übermäßigem Schlupf oder einsetzendem Blockieren kann abgespeichert werden, womit eine Bremswirkung bekannt ist, die einen blockierfreien Bremszustand herbeiführt. Damit kann ein Bremswunsch, der eine bestimmte Bremswirkung fordert, durch die gespeicherte blockierfreie Bremswirkung begrenzt werden, um an der Grenze der möglichen Straßenhaftung zu bremsen. Wenn sich nun die Straßenbedingungen verschlechtern (erkennbar am steigenden Radschlupf), wird Nachlassen der Bremswirkung nötig werden, um Blockieren des Rades zu verhindern. Damit kann die blockierfreie Bremswirkung nachgeführt werden. Wenn sich die Straßenbedingungen jedoch verbessern sollten (z.B. erkennbar am sinkenden Radschlupf), wäre wieder mehr Bremswirkungspotential vorhanden. Daher kann bei einem folgenden Bremsvorgang, bei den die geforderte Bremswirkung über der gespeicherten, aktuellen blockierfreien Bremswirkung liegt, die vorgegebene Bremswirkung erhöht werden, z.B. alle 20 Radumdrehungen, um zu ermitteln, ob nun tatsächlich mehr Bremswirkung erzielbar wäre, was wiederum in Form der blockierfreien Bremswirkung abgespeichert werden kann. Das Blockieren oder der Radschlupf kann durch "Bremswunsch" oder Straßenzustand bewirkt werden, aber auch durch Kurvenfahrt (z.B. inneres Rad weniger belastet, Seitenführungskräfte) oder durch eine schräge ("hängende") Straße. Das Verfahren kann unabhängig von der Ursache gleich angewendet werden und es kann zusätzlich von einer in Fahrzeug implementieren Stabilitätskontrolle (ESP, ABS) in den radindividuellen "Bremswunsch" eingegriffen werden, um Stabilitätsfälle (z.B. ABS) zu reduzieren. Mit diesem Verfahren werden im Gegensatz zum hydraulischen ABS, bei dem heftige schnelle Schwingungen des Druckes durch Ventile erzeugt werden, viel geringere Schwingungen der Bremswirkung erzielt und damit wird einerseits elektrische Energie gespart und andererseits wird generell besser an der Grenze der verfügbaren Haftung gebremst.

Wenn die Reibungsbremse 1 so ausgelegt wird, dass sich ein lineares Energieabsorptionsvermögen E_{V} ergibt, in dem z.B. durch eine nichtlineare Übersetzung in der Betätigung der Reibungsbremse 1 das Betätigungsmoment über den Betätigungsweg im Wesentlichen konstant gehalten wird, dann könnte auch das Zurückrechnen des Energieabsorptionsvermögens E_{V} unterbleiben, weil es immer gleich ist. Das Verfahren würde sich dann stark vereinfachen, weil bei immer gleichem (oder ähnlichem) Energieabsorptionsvermögen E_{V} die Motordrehzahl alleine (als Information der kinetischen Energie E_{K}) ausreicht, um zum richtigen Zeitpunkt, bzw. allgemein zum richtigen Punkt, also z.B. beim richtigen Winkel, auf Motorbremswirkung umzuschalten.

Für eine Öffnungsbewegung der Reibungsbremse 1 müssten die Vorzeichen der Energien in den oben beschrieben Verfahren entsprechend richtig gesetzt werden. Die Verfahren funktionieren aber prinzipiell gleich und würden analog angewendet, um vom Zustand starker Bremsung auf den Zustand schwacher Bremsung oder Ungebremst zu kommen. Im Sinne der Erfindung wird daher ein Öffnungsvorgang lediglich als Bremsvorgang mit teilweise geänderten Vorzeichen angesehen.

Wie oben dargelegt, kann für einen Bremsvorgang, z.B. zu Beginn des Bremsvorganges, am Ende des Bremsvorganges, zwischen Beginn und Ende des Bremsvorganges oder auch laufend während des Bremsvorganges, die Betätigungsenergie E_{E} ermittelt werden, entweder aus Messungen am Elektromotor 21 oder aus bekannten Daten zur Reibungsbremse 1. Mit der derart ermittelten Betätigungsenergie E_{E} kann dann weiters gezielt die Bremswirkung in einem bestimmten Arbeitspunkt des Bremsvorganges, z.B. zu Beginn des Bremsvorganges, am Ende des Bremsvorganges, zwischen Beginn und Ende des Bremsvorganges oder auch laufend während des Bremsvorganges, beeinflusst werden. Dabei muss der Zeitpunkt der Ermittlung der Betätigungsenergie E_{E} nicht unbedingt mit dem Zeitpunkt während des Bremsvorganges übereinstimmen, an dem die Bremswirkung beeinflusst wird.

Das Verfahren ist aber nicht darauf beschränkt, daß die Antriebsenegie zur Bremsbetätigung ausschließlich aus einem Elektromotor 21 kommt, wie im Normalbetrieb an sich vorgesehen. Es gibt z.B. Sicherheitsanforderungen, bei denen eine Reibungsbremse 1 bei Fehlern oder elektrischem Energieausfall automatisch bremsen muss. Dann ist eine Hilfsenergiequelle 32, wie z.B. eine vorgespannte Feder, ein Druckmittel, ein elektrischer Energiespeicher, etc., die in geeigneter Weise auf das Betätigungsmittel 20 zur Betätigung der Reibungsbremse 1 wirkt (wie in Fig.1 angedeutet), zur Bremsbetätigung vorhanden und der Elektromotor 21 dient danach wieder zum Lösen der Reibungsbremse 1. Es spielt beim Verfahren keine Rolle, ob die Betätigungsenergie ausschließlich aus einem Elektromotor 21 oder aus einer Hilfsenergiequelle 32 kommt oder aus einer beliebigen Kombination zwischen Elektromotor und Hilfsenergiequelle 32. Die Hilfsenergiequelle 32 wird einfach vorzeichenrichtig mit der Betätigungsenergie des Elektromotors 21 verrechnet.

Da wie oben beschrieben die Energie z.B. Kraft*Weg, Moment*Winkel oder die Summen oder das Integral davon ist, kann in Umkehrung auch die Kraft (oder das Moment) bei gegebenem Betätigungswegverlauf der Betätigung Reibungsbremse 1 ermittelt werden, z.B. durch mathematische Umkehrfunktionen, durch numerische Berechnung, Kennlinien, etc. Daher kann die Ermittlung der Betätigungsenergie E_{E} bei gegebener Betätigungswegkennlinie auch als Kraft-, bzw. Momenten-, Messung eingesetzt werden, z.B. um die Normalkraft auf den Bremsbelag 3, 6 ermitteln. Es steht also bei gegebenem Wegverlauf eine "Messung" der Normalkraft (oder des Bremsmoments bzw. der Bremswirkung) zur Verfügung. Damit können Kennlinien der Reibungsbremse 1 zu beliebigen Zeitpunkten, z.B. im Servicefall, aufgenommen werden. Beispielsweise kann bei Belagstausch eine Energie-Weg Kennlinie aufgenommen werden, die über das bekannte Kraft (Momenten) Verhalten der Reibungsbremse 1 in eine Kennlinie für Betätigungsweg zu Bremswirkung (Normalkraft, Bremsmoment) umwandeln. Diese ermittelten Kennlinien können dann für die Steuerung der Bremsvorgänge verwendet werden oder auf Übereinstimmung mit bekannten Kennlinien hin untersucht werden.

Statt dem Absolutwert der Betätigungsenergie E_{E} kann auch die zeitliche Veränderung (oder die Veränderungsgeschwindigkeit) oder Teile der Betätigungsenergie E_{E} verwendet werden. Da z.B. beim Überwinden eines Luftspaltes bereits Energie verbraucht wird, kann z.B. nur jener Teil der ermittelten Betätigungsenergie E_{E} verwendet werden, der tatsächlich mit Belagsandrückung, also mit Erzeugen einer Bremswirkung, verbunden ist. Der Energieanteil zur Überwindung eines Luftspaltes kann abgezogen werden oder zusätzlich verwendet werden, z.B. zur Ermittlung der Reibung im Leerauf (ohne Belagskraft), um Reibungseffekte zu kompensieren oder eine Warnung auszugeben, wenn die Reibung zu groß wird.

Der Anstieg der Betätigungsenergie E_{E} kann genutzt werden, um den Kontakt des Bremsbelages 3, 6 mit der Reibfläche zu erkennen, weil dann die Betätigungsenergie E_{E} stärker zunimmt.

Die Betätigungsenergie E_{E}, oder analog die Veränderung der Betätigungsenergie E_{E} oder die Veränderungsgeschwindigkeit, kann auch für einen Verschleißnachsteller 11 genutzt werden, um z.B. festzustellen, dass ein Bremsbelag 3, 6 bei Verschleißnachstellung in Kontakt mit der Reibfläche kommt. In diesem Fall kann der Verschleißnachsteller 11 den Bremsbelag 3, 6 wieder ein definiertes Stück von der Reibfläche wegfahren, um einen definierten Luftspalt zu bekommen.

Ebenso ist es denkbar, dass das oben beschriebene Verfahren zum Betätigen einer elektrischen Reibungsbremse 1 in analoger Weise auch zum Betätigen eines elektrisch angetriebenen Verschleißnachsteller 11 genutzt wird, um einen gewünschten Luftspalt einzustellen. In diesem Fall ist der Verschleißnachstellvorgang als Bremsvorgang und das Betätigen der Reibungsbremse 1 als Betätigen des Verschleißnachstellers der Reibungsbremse 1 zu verstehen.

## Patentansprüche

1. Verfahren zum Betätigen einer elektrisch betätigten, von einem Elektromotor (21) angetriebenen Reibungsbremse (1), bei dem für einen Bremsvorgang zur Erzielung einer vorgegebenen Soll-Bremswirkung der Reibungsbremse (1) ein Bremsbelag (3, 6) gegen eine Reibfläche gepresst wird, indem eine zur Soll-Bremswirkung zugehörige Soll-Position der Reibungsbremse (1) angefahren wird, **dadurch gekennzeichnet, dass** für den Bremsvorgang eine Betätigungsenergie (E_{E}) des Elektromotors (21) ermittelt wird und die ermittelte Betätigungsenergie (E_{E}) als Ist-Betätigungsenergie (E_{E_ist}) in der vorgegebenen Sollposition der Reibungsbremse (1) ermittelt wird und zur Sollposition oder zu einer Soll-Bremswirkung aus bekannten Daten zur Reibungsbremse (1) eine Soll-Betätigungsenergie (E_{E_soll}) ermittelt wird und eine Abweichung zwischen Ist-Betätigungsenergie (E_{E_ist}) und Soll-Betätigungsenergie (E_{E_soll}) durch Betätigen der Reibungsbremse (1) ausglichen wird.

2. Verfahren nach Anspruch 1, **dadurch gekennzeichnet, dass** die Reibungsbremse (1) am Ende des Bremsvorganges zum Ausgleich der Abweichung zwischen Ist-Betätigungsenergie (E_{E_ist}) und Soll-Betätigungsenergie (E_{E_soll}) betätigt wird, um die Soll-Bremswirkung zu erzielen.

3. Verfahren nach Anspruch 1 oder 2, **dadurch gekennzeichnet, dass** die Abweichung ausgeglichen wird, indem die Sollposition geändert wird.

4. Verfahren nach Anspruch 1 oder 2, **dadurch gekennzeichnet, dass** aus der Ist-Betätigungsenergie (E_{E_ist}) und der Soll-Betätigungsenergie (E_{E_soll}) eine Ist-Bremswirkung und eine Soll-Bremswirkung ermittelt werden und eine Abweichung zwischen Ist-Bremswirkung und eine Soll-Bremswirkung ausgeglichen wird.

5. Verfahren nach Anspruch 1, **dadurch gekennzeichnet, dass** ein Verschleißnachsteller (11) der Reibungsbremse (1) am Ende des Bremsvorganges betätigt wird, um einen Luftspalt in Abhängigkeit von der Abweichung zwischen Ist-Betätigungsenergie (E_{E_ist}) und Soll-Betätigungsenergie (E_{E_soll}) zu verändern.

6. Verfahren nach Anspruch 1, **dadurch gekennzeichnet, dass** ein Verschleißnachsteller (11) der Reibungsbremse (1) nach einer gewissen Zeit nach dem Bremsvorgang betätigt wird, um einen Luftspalt in Abhängigkeit von der Abweichung zwischen Ist-Betätigungsenergie (E_{E_ist}) und Soll-Betätigungsenergie (E_{E_soll}) zu verändern.

7. Verfahren nach Anspruch 6, **dadurch gekennzeichnet, dass** auftretende Abweichungen in dieser Zeit gemittelt werden.

8. Verfahren nach Anspruch 1, **dadurch gekennzeichnet, dass** für den Bremsvorgang aus einer bekannten Motorbremsenergie (E_{B}) des Elektromotors (21) und der Betätigungsenergie (E_{E}) ein Energieabsorptionsvermögen (E_{V}) der Reibungsbremse (1) vor Erreichen einer Sollposition oder Soll-Bremswirkung ermittelt wird und während des Bremsvorganges die aktuelle kinetische Energie (E_{K}) des Elektromotors (21) mit dem zur aktuellen Position oder Bremswirkung zugehörigen Energieabsorptionsvermögen (E_{V}) verglichen wird und bei Übereinstimmung der Elektromotor (21) auf Abbremsen umgeschaltet wird, um den zeitlichen Verlauf der Bremswirkung zur Erreichung der Sollposition oder Soll-Bremswirkung zu beeinflussen.

9. Verfahren nach Anspruch 8, **dadurch gekennzeichnet, dass** am Ende des Bremsvorganges eine gewünschte Restgeschwindigkeit der Betätigung aufrechterhalten wird.

10. Verfahren nach einem der Ansprüche 1 bis 9, **dadurch gekennzeichnet, dass** die Reibungsbremse (1) von einer Kombination aus Elektromotor (21) und Hilfsenergiequelle (32) angetrieben wird, wobei der Anteil der Hilfsenergiequelle (32) im Bereich von 0 bis 100%, vorzugsweise 20 bis 100%, liegt.

11. Verfahren nach einem der Ansprüche 1 bis 10, **dadurch gekennzeichnet, dass** die Reibungsbremse (1) an einem Fahrzeugrad betrieben wird und die Soll-Bremswirkung auf eine gespeicherte, von aktuellen Straßenbedingungen abhängige, blockierfreie Bremswirkung, mit der ein Blockieren des Fahrzeugrades verhindert wird, beschränkt wird.

## Claims

1. A method for actuating an electrically actuated friction brake (1) that is driven by an electric motor (21), in which for a braking operation, in order to achieve a predefined setpoint braking effect of the friction brake (1), a brake lining (3, 6) is pressed against a friction surface by setting a setpoint position of the friction brake (1) that is associated with the setpoint braking effect, **characterized in that** an actuation energy (E_{E}) of the electric motor (21) is determined for the braking operation, and the determined actuation energy (E_{E}) is determined as the actual actuation energy (E_{E_ist}) in the predefined setpoint position of the friction brake (1), and a setpoint actuation energy (E_{E_soll}) is determined with respect to the setpoint position or with respect to a setpoint braking effect from known data related to the friction brake (1), and a deviation between the actual actuation energy (E_{E_ist}) and the setpoint actuation energy (E_{E_soll}) is compensated for by actuating the friction brake (1).

2. The method according to Claim 1, **characterized in that** at the end of the braking operation the friction brake (1) is actuated for compensating for the deviation between the actual actuation energy (E_{E_ist}) and the setpoint actuation energy (E_{E_soll}) in order to achieve the setpoint braking effect.

3. The method according to Claim 1 or 2, **characterized in that** the deviation is compensated for by changing the setpoint position.

4. The method according to Claim 1 or 2, **characterized in that** an actual braking effect and a setpoint braking effect are determined from the actual actuation energy (E_{E_ist}) and the setpoint actuation energy (E_{E_soll}), respectively, and a deviation between the actual braking effect and a setpoint braking effect is compensated for.

5. The method according to Claim 1, **characterized in that** a wear adjuster (11) of the friction brake (1) is actuated at the end of the braking operation in order to change an air gap as a function of the deviation between the actual actuation energy (E_{E_ist}) and the setpoint actuation energy (E_{E_soll}).

6. The method according to Claim 1, **characterized in that** a wear adjuster (11) of the friction brake (1) is actuated after a certain time period after the braking operation in order to change an air gap as a function of the deviation between the actual actuation energy (E_{E_ist}) and the setpoint actuation energy (E_{E_soll}).

7. The method according to Claim 6, **characterized in that** deviations which occur are averaged over this time period.

8. The method according to Claim 1, **characterized in that** for the braking operation, an energy absorption capacity (E_{V}) of the friction brake (1) is determined prior to achieving a setpoint position or setpoint braking effect, from a known motor braking energy (E_{B}) of the electric motor (21) and the actuation energy (E_{E}), and during the braking operation the instantaneous kinetic energy (E_{K}) of the electric motor (21) is compared to the energy absorption capacity (E_{V}) associated with the instantaneous position or braking effect, and when the two match, the electric motor (21) is switched over to deceleration in order to influence the temporal variation of the braking effect for achieving the setpoint position or the setpoint braking effect.

9. The method according to Claim 8, **characterized in that** a desired residual speed of the actuation is maintained at the end of the braking operation.

10. The method according to any of Claims 1 to 9, **characterized in that** the friction brake (1) is driven by a combination of the electric motor (21) and an auxiliary energy source (32), the proportion of the auxiliary energy source (32) being in the range of 0 to 100%, preferably 20 to 100%.

11. The method according to any of Claims 1 to 10, **characterized in that** the friction brake (1) is operated on a vehicle wheel, and the setpoint braking effect is limited to a stored, from current roadway conditions dependent, lock-free braking effect, with which locking of the vehicle wheel is prevented.

## Revendications

1. Procédé d'actionnement d'un frein à friction (1) à actionnement électrique, commandé par un moteur électrique (21), pour lequel une plaquette de frein (3, 6) est pressée contre une surface de frottement pour un processus de freinage, afin d'obtenir un effet de freinage nominal prévu des freins à friction (1), en ce qu'une position nominale adéquate pour l'effet de freinage nominal des freins à friction (1) est démarrée, **caractérisé en ce qu**'une énergie d'actionnement (E_{E}) du moteur électrique (21) est déterminée pour le processus de freinage et l'énergie d'actionnement (E_{E}) déterminée est déterminée en tant qu'énergie d'actionnement réelle (E_{E_ist}) dans la position nominale définie du frein à friction (1) et une énergie d'actionnement nominale (E_{E_soll}) est déterminée pour la position nominale ou pour un effet de freinage nominal à partir de données connues pour le frein à friction (1) et un écart entre l'énergie d'actionnement réelle (E_{E_ist}) et l'énergie d'actionnement nominale (E_{E_soll}) est équilibré par actionnement du frein à friction (1).

2. Procédé selon la revendication 1, **caractérisé en ce que** le frein à friction (1) est actionné à la fin du processus de freinage pour équilibrer l'écart entre l'énergie d'actionnement réelle (E_{E_ist}) et l'énergie d'actionnement nominale (E_{E_soll}), afin de parvenir à l'effet de freinage nominal.

3. Procédé selon la revendication 1 ou 2, **caractérisé en ce que** l'écart est équilibré, **en ce que** la position nominale est modifiée.

4. Procédé selon la revendication 1 ou 2, **caractérisé en ce qu**'un effet de freinage réel et un effet de freinage nominal sont déterminés à partir de l'énergie d'actionnement réelle (E_{E_ist}) et de l'énergie d'actionnement nominale (E_{E_soll}) et un écart entre l'effet de freinage réel et un effet de freinage nominal est équilibré.

5. Procédé selon la revendication 1, **caractérisé en ce qu**'un élément de rattrapage de l'usure (11) des freins à friction (1) est actionné à la fin du processus de freinage afin de modifier un entrefer en fonction de l'écart entre l'énergie d'actionnement réelle (E_{E_ist}) et l'énergie d'actionnement nominale (E_{E_soll}).

6. Procédé selon la revendication 1, **caractérisé en ce qu**'un élément de rattrapage de l'usure (11) des freins à friction (1) est actionné après un certain temps après le processus de freinage, afin de modifier un entrefer en fonction de l'écart entre l'énergie d'actionnement réelle (E_{E_ist}) et l'énergie d'actionnement nominale (E_{E_soll}).

7. Procédé selon la revendication 6, **caractérisé en ce que** les écarts apparus sont déterminés dans cet intervalle.

8. Procédé selon la revendication 1, **caractérisé en ce que,** pour le processus de freinage à partir d'une énergie de freinage du moteur (E_{B}) du moteur électrique (21) connue et de l'énergie d'actionnement (E_{E}), une capacité d'absorption d'énergie (E_{V}) des freins à friction (1) est déterminée avant d'atteindre une position nominale ou un effet de freinage nominal, et, au cours du processus de freinage, l'énergie cinétique (E_{K}) actuelle du moteur électrique (21) est comparée avec la capacité d'absorption d'énergie (E_{V}) adéquate à la position ou effet de freinage actuel(le) et, en cas d'adéquation du moteur électrique (21), est commuté sur freinage, afin d'influencer le déroulement temporel de l'effet de freinage pour parvenir à la position nominale ou pour parvenir à l'effet de freinage nominal.

9. Procédé selon la revendication 8, **caractérisé en ce qu**'une vitesse résiduelle souhaitée de l'actionnement est maintenue à la fin du processus de freinage.

10. Procédé selon l'une quelconque des revendications 1 à 9, **caractérisé en ce que** le frein à friction (1) est commandé par une combinaison de moteur électrique (21) et de source d'énergie auxiliaire (32), dans lequel la part de source d'énergie auxiliaire (32) se situe dans une plage allant de 0 à 100 %, préférablement de 20 à 100 %.

11. Procédé selon l'une quelconque des revendications 1 à 10, **caractérisé en ce que** le frein à friction (1) fonctionne sur une roue de véhicule et l'effet de freinage nominal est limité à un effet de freinage sans blocage, enregistré, dépendant des conditions de circulation actuelles, avec lequel un blocage de la roue du véhicule est empêché.
